# EUROPEAN PATENT APPLICATION

(11) **EP 1 983 025 A1**
(43) Date of publication of application: **22.10.2008**
(21) Application number: 07106318.4
(22) Date of filing: 17.04.2007
(51) Int. Cl.: C08K 9/10, C08L 5/04, C08K 5/01

(54) **Polymeric material comprising multiple cavities**

(71) Applicant: Stichting Dutch Polymer Institute, 5612 AB Eindhoven (NL)
(72) Inventor: Fischer, Rudolf, 5612 AP, Eindhoven (NL); Mookhoek, Steven Delft University of Technology, Kluyverweg 1 2629 HS, Delft (NL); Zwaag, van der, Sybrand Delft University of Technology, Kluyverweg 1 2629 HS, Delft (NL)
(74) Representative: DeltaPatents B.V.

(57) **Abstract**

The invention relates to a polymeric material comprising multiple cavities, wherein said cavities comprise a functional liquid. The invention also relates to a process of making the polymeric material from an emulsion of a functional liquid with a polymer in solution, in the melt or a polymer precursor which reacts to obtain the polymeric material having cavities filled with functional liquid.

## Description

The present invention relates to a polymeric material comprising multiple cavities, a process for the preparation of the polymeric material, and a composite material comprising a matrix and the polymeric material as a filler.

Materials that are applied in structures, products, etc. are susceptible to damage. For example, the material might break due to heavy loading, it may deteriorate as an effect of ageing, it may change its (chemical) composition, etc. In some cases a damaged site can easily be repaired. However, in many cases it is very difficult to repair a damaged site of a material because it may be hard to reach the material if it is part of a complex construction. Furthermore, in some cases the damage is difficult to detect, or even impossible in case it is located within the material. Furthermore, if a damaged site isn't repaired in time, the damaged site may propagate and lead to mechanical failure. In that case it will be necessary to replace material in its entirety.

In order to find a solution to this problem, systems have been developed for self-repair of materials. Currently two systems for the self-repair of cracks in structural materials are known. In "Matrix cracking repair and filling" hollow glass fibres are disclosed as a storage medium, which are filled with chemicals *(*Dry, C., Smart Mater. Struct. 3 (1994) 118-123*).* Said glass fibres are inserted in a matrix of concrete. When the concrete is loaded to the extent that micro cracking of the concrete occurs, also the glass fibres that are inserted in the concrete break and release the chemicals. The chemicals subsequently flow into the micro cracks, and by hardening fill the cracks in the concrete, repairing the material and restoring its toughness. Bond et al. (in Composites: Part A 36 (2005) 183-188 and in Smart Mater. Struct. 15 (2006) 704-710*)* describe a system in which hollow glass fibres are used in a polymer matrix, the fibres containing a one-part resin system, a two-part resin system or a resin system with a catalyst or hardener contained within the matrix material. In case of the two-part resin system, part of the glass fibres is filled with resin and the other part is filled with hardener. The two differently filled fibres are inserted adjacently in the polymer matrix. Successful repair depends on whether the two separate contents (uncured resin and hardener) combine properly. Also fibres filled with a fluorescent dye can be used, providing for visualisation of the damaged site upon cracking.
A disadvantage of these hollow glass fibre systems is that, upon cracking of the matrix, the entire content of the hollow glass fibre is released, as a result of which the particular fibre (which covers a large area of the matrix) is unable to perform a second release upon further fracture of the matrix. In other words, the self-repair feature originating from one hollow glass fibre is limited to a once-only event. Further disadvantages of the hollow glass fibre systems are complexity of the manufacturing, for example the difficulty of filling the fibres with a liquid and the end-capping of the fibres, and processing steps (amongst others due to the difficulty of working with thin and brittle glass fibres).

US Patent no. 6,858,695 discloses a self-repairing composite material consisting of a polymer matrix with an embedded catalyst, comprising spherical capsules filled with monomer. Upon fracture of the composite material, a crack inside the composite material will propagate, breaking some capsules on its path, subsequently releasing the contents of the capsules (i.e. the monomer) into the crack plane. The released monomer will thereupon have contact with the embedded catalyst and will polymerize, filling the crack and stopping its propagation. Approximately 75% of fracture toughness of the composite is recovered after repair.
A disadvantage of this system is that, in order to ensure that the capsules are actually reached by the fracture in the matrix, a large number of spherical capsules is needed. Moreover, the mechanical properties of the polymer material deteriorate by incorporating a large amount of the capsules, and the processing of the material becomes more difficult due to its high viscosity and the risk of breaking the capsules.

It is one of the objectives of the present invention to provide a material for storage of a functional liquid that, when incorporated in a matrix, has a large chance of breaking when a crack in the matrix occurs, and that releases only a certain amount of the functional liquid, subsequently retaining the capability of releasing another amount of the functional liquid.

This object is achieved by the polymeric material of the present invention, said polymeric material comprising multiple cavities, wherein said cavities comprise a functional liquid. In a preferred embodiment of the invention, said polymeric material is anisotropic.
The invention also relates to a process for making a polymeric material of the present invention , comprising the steps (1) making an emulsion from a functional liquid (component A) and a polymer solution (component B), whereas component A is in the dispersed phase, and component B is in the continuous phase; and (2) solidifying of component B.
The invention furthermore relates to a composite material comprising a matrix material and filler material, wherein the filler material is the polymeric material of the present invention.

In the following a detailed description of the invention will be given.

Composite materials are engineering materials made from two or more constituent materials. The composite material of the present invention comprises a matrix and a filler. The filler imparts its properties to enhance the properties of the matrix material. The composite material may comprise more than one filler.
The **composite material** of the present invention comprises at least one filler which is a polymeric material containing multiple cavities, said cavities containing a functional liquid.
The functional liquid is a liquid that fulfils a function when released from the cavities in the polymeric material of the filler. For example the functional liquid can have the function of being an indicator of damage of the composite material or of acting as a self healing agent for the composite material. The action of the composite material in case of damage is as follows. Damage will cause the development of cracks in the composite material, which may eventually lead to failure of the composite material. The crack generated in the matrix as a result of external or internal forces will reach the polymeric material and break the polymeric material. The cavities of the polymeric material located in the vicinity of the crack will open and release the functional liquid present in said cavities. The functional liquid will move into the crack and perform its function.
The **polymeric material** of the present invention contains multiple cavities and substantially all cavities contain a functional liquid. The cavities can have any conceivable shape, like spherical, elliptic, etc. and can vary in size. Preferably, the cavities have an average diameter of 10 nm to 1 mm, more preferably 30-500 .µ.m, most preferably to 50-300 . µm. The wall thickness of the cavities is preferably 100 nm to 3 µm.
The presence of multiple cavities gives the advantage that the function of the polymeric material (this is the release of the functional liquid and the performance of the function of this liquid) can be performed several times. Generating longer life time of the composite material or better indication of failure of the composite material.
The polymeric material itself may also have several shapes, for example a fibre shape, a film, etc. In a preferred embodiment of the present invention the polymeric material is anisotropic, more preferably the polymeric material has a fibre shape. This increases the chance that when the matrix breaks and a resulting crack propagates through the matrix, this crack actually reaches the polymeric material inserted in the matrix, the functional liquid can be released and the function of the liquid (like coloring or self healing) can be performed.
The polymer used to form the polymeric material containing cavities can be any polymer that hardens by coagulation, crosslinking, crystallisation, etc. In a preferred embodiment of the present invention said polymer is choosen from polyamides such as nylons; polyesters such as poly(ethylene terephthalate) and polycaprolactone; polycarbonates; polyethers such as epoxides; polyimides such as polypyromellitimide (for example KAPTAN); phenol-formaldehyde resins (for example BAKELITE); amine-formaldehyde resins such as a melamine resin; polysulfones; poly(acrylonitrile-butadiene-styrene) (ABS); polyurethanes; polyolefins such as polyethylene, polystyrene, polyacrylonitrile, polyvinyls, polyvinyl chloride, poly(DCPD) and poly(methyl methacrylate); polysilanes such as poly(carborane-siloxane); and polyphosphazenes.
The matrix material and polymeric material should be chosen such that the fracture toughness (K_{lc}) of both materials relate to each other according to the formula: K_{lc matrix}/ K_{lc filler} ≥ 1 wherein K_{lc matrix} is the fracture toughness of the matrix material and K_{lc filler} is the fracture toughness of the polymeric material. In other words the polymeric material should be more brittle than the matrix material. Also the selection of polymeric material wall thickness depends on the matrix. For example, polymeric material walls that are too thick will not break when a crack approaches, while polymeric materials with very thin walls will break during processing.

The **functional liquid** enclosed in the cavities of the polymeric material can be an agent for self-repair of structural materials, for example a hardener or a crosslinker. The functional liquid can also be a detection agent, for example for optical detection (coloring agent), electromagnetic detection, or detection by other senses (e.g. smell). In one embodiment of the invention the functional liquid contains a monomer or prepolymer, and may optionally contain other ingredients, such as stabilizers, solvents, viscosity modifiers such as polymers, odorants, colorant and dyes, blowing agents, antioxidants, and co-catalysts.
The composite material of the present invention may also contain an **activator** which corresponds to the monomer or prepolymer of the functional liquid. The activator will for example activate the monomer, so that a polymerization reaction will start and the healing of the composite material takes place. The activator may also be present as a functional liquid in a second polymeric material that can be present in the matrix together with the polymeric material containing the monomer or prepolymer. Preferably, the activator is a catalyst or an initiator.
Examples of monomers or prepolymers are cyclic olefins, preferably containing 4-50 carbon atoms and optionally containing heteratoms, such as DCPD, substituted DCPDs, norbornene, substituted norbornene, cyclooctadiene, and substituted cyclooctadiene. Corresponding catalysts for these are ring opening metathesis polymerization (ROMP) catalysts such as Schrock catalysts (Bazan, G. C.; Schrock, R. R.; Cho, H.-N.; Gibson, V. C. Macromolecules 24, 4495-4502(1991)) and Grubbs catalysts (Grubbs, R. H.; Chang, S. Tetrahedron 54, 4413-4450 (1998)). Another example of monomers or prepolymers are lactones such as caprolactone, and lactams, that when polymerized will form polyesters and nylons, respectively. Corresponding catalysts for these are cyclic ester polymerization catalysts and cyclic amide polymerization catalysts, such as scandium triflate.

Furthermore, the functional liquid may contain a monomer or prepolymer and one part of a two-part catalyst, with a corresponding initiator being the second part of the two-part catalyst. Said corresponding initiator (being the second part of the two-part catalyst) can be dispersed in the matrix. For example, the monomer or prepolymer may be a cyclic olefin; one part of a two-part catalyst may be a tungsten compound, such as an organoammonium tungstate, an organoarsonium tungstate, or an organophosphonium tungstate; or a molybdenum compound, such as organoammonium molybdate, an organoarsonium molybdate, or an organophosphonium molybdate. The second part of the two-part catalyst may be an alkyl aluminum compound, such as an alkoxyalkylaluminum halide, an aryloxyalkylaluminum halide, or a metaloxyalkylaluminum halide in which the metal in the compound is tin, lead, or aluminum; or an organic tin compound, such as a tetraalkyltin, a trialkyltin hydride, or a triaryltin hydride.

In another such system, the monomer or prepolymer may be unsaturated compounds such as acrylates; acrylic acids; alkyl acrylates; alkyl acrylic acids; styrenes; isoprene; and butadiene. In this case, atom transfer radical polymerization (ATRP) may be used, with one of the two components being mixed with the monomer or prepolymer and the other acting as the initiator: one component being an organohalide such as 1-chloro-1-phenylethane, and the other component could be a copper(I) source such as copper(I) bipyridyl complex. Alternatively, one component could be a peroxide such as benzoyl peroxide, and the other component could be a nitroxo precursor such as 2,2,6,6-tetramethylpiperidinyl-1-oxy (TEMPO). These systems are described in Malcolm P. Stevens; Polymer Chemistry: An Introduction, 3rd Edition; New York: Oxford University Press, 1999, p. 184-186.

In another such system, the monomer or prepolymer may contain isocyanate functional groups (-N=C=O) with hydroxyl functional groups (-OH). For this system, monomer or prepolymer may for example be a compound containing both an isocyanate group and a hydroxyl group, or two different compounds, one compound containing at least two isocyanate groups and the other compound containing at least two hydroxyl groups. The reaction between an isocyanate group and a hydroxyl group can form a urethane linkage (-N-C(=O)-O-) between the compounds, possibly releasing carbon dioxide. This carbon dioxide can provide for the creation of expanded polyurethane foam; optionally the functional liquid may contain a blowing agent, for example a volatile liquid such as dichloromethane. In this case, condensation polymerization may be used, with one of the two components being mixed with the monomer or prepolymer and the other acting as the initiator: for example, one component could be an alkyltin compound such as stannous 2-ethylhexanoate, and the other component could be a tertiary amine such as diazabicyclo[2.2.2]octane (DABCO). These systems are described in Malcolm P. Stevens; Polymer Chemistry: An Introduction, 3rd Edition; New York: Oxford University Press, 1999, p. 378-381.

Optionally, a separate set of polymeric materials may also contain stabilizers, solvents, viscosity modifiers such as polymers, odorants, colorant and dyes, blowing agents, antioxidants, and co-catalysts. Optionally, a set of polymeric materials may be present that contain one or more additional ingredients, such as stabilizers, solvents, viscosity modifiers such as polymers, odorants, colorant and dyes, blowing agents, antioxidants, and co-catalysts.

The **matrix material** can be any engineering material, for example a polymer, concrete, or a ceramic material. In a preferred embodiment of the invention the matrix material is a polymer. Examples of polymers as matrix material include polyamides such as nylons; polyesters such as poly(ethylene terephthalate) and polycaprolactone; polycarbonates; polyethers such as epoxides; polyimides such as polypyromellitimide (for example KAPTAN); phenol-formaldehyde resins (for example BAKELITE); amine-formaldehyde resins such as a melamine resin; polysulfones; poly(acrylonitrile-butadiene-styrene) (ABS); polyurethanes; polyolefins such as polyethylene, polystyrene, polyacrylonitrile, polyvinyls, polyvinyl chloride, poly(DCPD) and poly(methyl methacrylate); polysilanes such as poly(carborane-siloxane); and polyphosphazenes.

In case a polymer is used as matrix material, the polymeric material (or sets of polymeric materials) and optionally the activator may be dispersed into the matrix by forming the polymer around the polymeric material and activator, such as by polymerizing monomer to form the polymer matrix with the polymeric material and activator mixed into the monomer. Particularly in the case of catalysts, the catalyst may serve as both a catalyst for the polymer (of the matrix) and as the corresponding activator for the functional liquid in the polymeric material. Examples of this system include DCPD as the functional liquid, the polymer is poly(DPCD), and a Grubbs catalyst serves to form the poly(DPCD) and acts as the activator for the DCPD in the polymeric material; and caprolactone as the functional liquid, the polymer is poly(caprolactone), and scandium triflate acts as the activator for the caprolactone in the polymeric material.
Alternatively, the polymer matrix may be first formed, and then the polymeric material and activator mixed in. For example, the polymer may be dissolved in a solvent and the polymeric material and activator mixed into the solution, followed by removal of the solvent. The activator may be coated onto the polymeric material prior to dispersing the polymeric material into the polymer. Furthermore, other components may be added to the polymer matrix, such as fibers, fillers, adhesion modifiers, blowing agents, anti-oxidants, colorants and dyes, and fragrances.

The adhesion between the polymeric material and the matrix influences whether the polymeric material will break or debond in the presence of an approaching crack. To promote the adhesion between the matrix and wall of the polymeric material, various silane coupling agents may be used. Typically, these are compounds of the formula R--SiX.sub.3 Where R is preferably a reactive group R.sup.1 separated by a propylene group from silicon, and X is an alkoxy group (preferably methoxy), such as R.sup.1 CH.sub.2 CH.sub.2 CH.sub.2 Si(OCH.sub.3).sub.3. Examples include silane coupling agents available from DOW CORNING (with reactive group following the name in parentheses): Z6020 (Diamino); Z6030 (Methacrylate); Z6032 (Styrylamine Cationic); Z6040 (Epoxy); and Z6075 (Vinyl).
To increase the adhesion between the polymeric material and the matrix, the polymeric material may be treated by washing the polymeric material in a solution of the coupling agent. For example, polymeric material of urea-formaldehyde may be washed in a solution of Silane Z6020 or Z6040 and hexane (1:20 wt.) followed by adding Silane Z6032 to the matrix (1% wt.).

The invention also relates to a **process** for the preparation of the polymeric material. In general, any process wherein a polymeric material is formed containing cavities which are filled with the functional liquid can be used. Preferred examples of suitable processes are processes wherein dispersions of functional liquid and the polymer or polymer precursors are applied. Preferably the functional liquid is present as the dispersed phase, while the polymer or polymer precursor is present as the continuous phase of the dispersion. The polymeric material may be prepared by solidifying the polymer (for example by extracting any solvent present in the polymer-continuous phase, by crystallization of the polymer and the like). Alternatively the polymer can be prepared by polymerizing the polymer precursor (for example a monomer), thereby encapsulating the functional liquid in cavities inside the polymer.

In one embodiment of the invention, the polymeric material can be made out of an emulsion. An emulsion is an example of a two-phase system, . Surface active substances (like for example surfactants) can be added to stabilize the emulsion (surrounding the dispersed phase substance, acting as repelling agent for other substance).

The process for the preparation of the polymeric material out of an emulsion generally comprises two steps. The first step of the process is making a stable emulsion in which the dispersed phase is "component A", and the continuous phase is "component B". Component A contains the functional liquid and component B contains the polymer used to form the polymeric material and a solvent for the polymer. Component B may additionally contain an emulsifying agent. Other additional substances for making an emulsion may also be present in both Component A and Component B. Component A and component B are substantially phase separated. The process for the preparation of an emulsion from Component A and Component B is known in the art.
The second step of the process is to make component B (the continuous phase of the emulsion) insoluble, or in other words harden component B, as a result of which cavities are created containing component A. This can be effectuated by for example coagulation, crosslinking, or crystallisation. In a preferred embodiment of the invention, component B is made insoluble by crosslinking. For example by spinning the emulsion in a solution (said solution containing a crosslinker) the polymeric material of the invention is formed in the shape of a fibre. The emulsion can also be extruded, forming the polymeric material in the shape of fibre as well, or in the form of a sheet or film.

The present invention furthermore relates to the use of the polymeric material in a matrix and an article made from the composite material.

The invention will be illustrated by the following Examples, which are not meant to restrict the invention in whatever form.

### Example 1

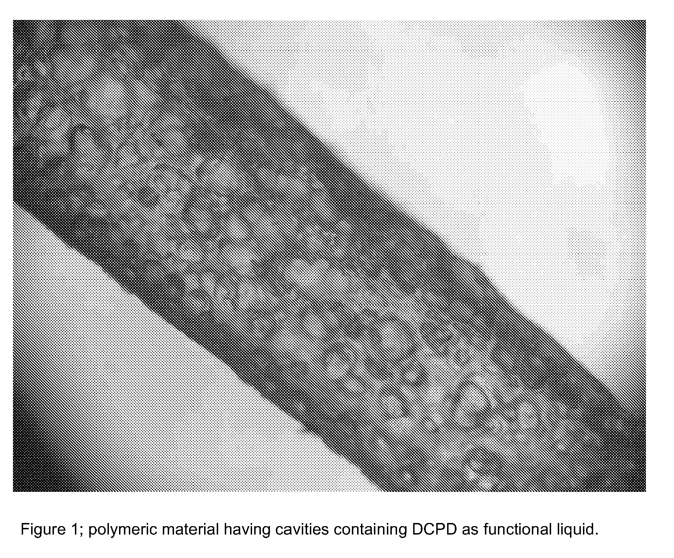

An emulsion was made from component A (dicyclopentadiene monomer (DCPD)) and component B (polymer (sodium alginate) dissolved in water containing as emulsifying agent ethylene-maleic anhydride copolymer (EMA)) as follows. A portion of 5.0 ml of a 2.5 wt% EMA solution in water was mixed with 25 ml of H₂O. Subsequently 0.75 g of sodium alginate was dissolved in this solution by heating the water to 60°C. After fully dissolving the polymer, the mixture was cooled down to room temperature and 5 ml of DCPD was dispersed in the obtained polymer solution by mechanical stirring creating the emulsion. Parallel a 0.45 M solution of CaCl₂ was prepared.
The created emulsion was poured in a syringe and the emulsion was injected from the syringe into the CaCl₂ solution (keeping the syringe needle below the surface of the CaCl₂ solution), producing a fibre. The produced wet fibre was removed from the CaCl₂ solution and washed with water to remove excess salt ions. The fibre was hung to dry for 24 hours. After drying a rigid and brittle fibre containing liquid DCPD in separate small reservoirs was obtained. See Figure 1, depicting a cross section of the fibre.

### Example 2

Example 1 was repeated, with the addition that 0.5 wt% coloring agent (disperse red 1 (Sigma Aldrich) CAS# 2872-52-8) was added and dissolved in the DCPD (Component A). The resulting fibre was inserted in an epoxy matrix (by inserting certain lengths of fibre in a mould, and applying epoxy resin around the fibre and subsequently hardening the resin). Upon breaking of the matrix, the colored liquid leaked out of the fibre and filled the crack in the matrix.

## Claims

1. Polymeric material comprising multiple cavities, wherein said cavities comprise a functional liquid.

2. Polymeric material according to claim 1, wherein said material is anisotropic.

3. Polymeric material according to anyone of claims 1-2, wherein said material is in the shape of a fibre.

4. Polymeric material according to anyone of claims 1-3, wherein said cavities have an average diameter of 10 nm to 1 mm.

5. Polymeric material according to anyone of claims 1-4, wherein said functional liquid is a hardener or a crosslinking agent.

6. Polymeric material according to anyone of claims 1-4, wherein said functional liquid is a coloring agent.

7. Process for the preparation of a polymeric material according to any of claims 1-x, comprising the steps
a. making an emulsion from a functional liquid (dispersed phase; component A) and a polymer solution (continuous phase; component B) and
b. hardening of component B.

8. Process according to claim 7, wherein component B also contains an emulsifying agent.

9. Process according to claim 7 or 8, wherein the polymer of component B is sodium alginate.

10. Process according to anyone of claims 7-9, wherein the functional liquid of component A is dicyclopentadiene monomer.

11. Process according to anyone of claims 7-10, wherein said step 2 is executed by spinning the emulsion of step 1 in a liquid containing a component that reacts with the polymer of component B.

12. Composite material comprising a matrix material and filler material, wherein the filler material is the polymeric material according to any of claims 1-6.

13. Composite material according to claim 12, wherein the matrix material is a polymer.

14. Composite material according to claim 12, wherein the matrix material is a concrete or a ceramic material.

15. Composite material according to anyone of claims 12-14, wherein the composite material contains an activator for the functional liquid.

16. Use of the polymeric material according to any of claims 1-6 in a composite material.

17. Article made from the composite material according to any of claims 1-6.
